# EUROPEAN PATENT APPLICATION

(11) **EP 4 775 694 A1**
(43) Date of publication of application: **15.07.2026**
(21) Application number: 25171347.5
(22) Date of filing: 17.04.2025
(51) Int. Cl.: C21C 5/52, C21C 5/56, C21C 7/10, F27B 3/08, F27B 3/28, F27D 19/00

(54) **SYSTEM TO PRODUCE GREEN STEEL THROUGH ELECTRIC ARC FURNACE WITH VERY LOW GHG EMISSION INTENSITY**

(30) Priority: 10.01.2025 IN 202521002534
(71) Applicant: Saarloha Advanced Materials Private Limited, Pune, Maharashtra 411036 (IN)
(72) Inventor: Goyal, Ravindra Kumar, 411036 Maharashtra (IN); Puranik, Abhiram Janardan, 411036 Maharashtra (IN); Bharambe, Chandan Jagannath, 411036 Maharashtra (IN)
(74) Representative: Feder Walter Ebert

(57) **Abstract**

The present disclosure provides a method (100) for producing green steel (600) using an environmentally sustainable and energy-efficient process. The method (100) includes the step of- obtaining scrap (201) from one or more sources of scrap (700), wherein the scrap (201) contains different types of scrap alloys (202) and use of Pig iron and DRI is prohibited. The obtained scrap (201) is charged into an electric furnace (203), preferably an electric arc furnace (EAF), and melted in the presence of a controlled supply of oxygen. Oxygen supply is regulated using one or more controlling means (205) to ensure precise metallurgical reactions. The molten steel (204) obtained from the electric arc furnace (203) is transferred to a refining furnace (207) for purification and chemical composition adjustment. The refined molten steel (204) is transferred to vacuum refining unit (208) and then transferred to a casting area (206) for solidification of green steel (600).

## Description

### Technical field

The embodiments of the present disclosure generally relate to the field of metallurgy. More particularly, the present disclosure relates to a system and a method that involves a modified melting step with an electric arc furnace (hereinafter "EAF") to produce environmentally friendly i.e. green steel with low carbon emissions, contributing to the decarbonization of the steel industry. It may be appreciated that the term "green steel" throughout the description refers to steel produced using environmentally friendly and sustainable methods which involves usage of electricity generated from renewable energy sources, reduction of carbon dioxide emissions, and minimization and recycling of waste during the production process.

### Background

Background description includes information that may be useful in understanding the present disclosure.

Steel is a fundamental material in the modern world and plays a vital role in supporting global economic development. With increasing demand for steel, especially in emerging economies like India, steel production must meet rising needs while addressing environmental concerns. India, currently the second-largest steel producer globally, aims to achieve a production capacity of 300 million tons by 2030. However, the steel sector is also one of the largest contributors to global greenhouse gas (GHG) emissions, accounting for approximately 7-9% of global emissions, with India contributing 12% of those emissions.

The traditional steelmaking process, particularly the blast furnace (BF) - basic oxygen furnace (BOF) route, is highly emission-intensive and relies on iron ore as a primary raw material. In contrast, the electric arc furnace (EAF) route uses scrap metal as the primary raw material, offering a potentially lower carbon footprint. However, even with this more sustainable approach, the EAF route still results in significant GHG emissions, primarily due to energy consumption, scrap quality variations, and the oxygen-intensive nature of the refining process.

Green steel, or low-GHG emission steel, is a critical objective in the ongoing efforts to decarbonize the steel industry. A variety of strategies have been developed to minimize emissions during the steel production process, including increasing the use of scrap metal, utilizing renewable energy sources, and improving the energy efficiency of the furnaces. The EAF route, especially when paired with technological advancements like controlled oxygen supply and electric vehicles (EVs) for scrap transportation, holds promise as a cleaner method for producing steel.

Moreover, the traditional steelmaking process is characterized as one of the most emission-intensive processes. These processes include Steel making through Blast Furnace (BF) - Basic Oxygen furnace (BOF) route, Electric arc furnace route (EAF), and Induction Furnace (IF) Route. In the BF-BOF route, steel is produced with iron ore, in the EAF route either 100% scrap or Scrap along with DRI/ Pig iron mix is used. Based on the different input raw materials used for melting, the total GHG emission varies. In recent years several melting routes have been used to produce steel, which are related to the manufacturing of steel.

The prior art disclosed several methods related to steel manufacturing, particularly focusing on improving the efficiency of scrap usage in the EAF.

A prior art reference, "US 9,045,810 B2 describes a method for melting steel in an electric arc furnace using a "hot heel," a mass of molten metal retained from previous operations. The hot heel helps maintain the necessary temperature to melt new scrap metal, optimizing the process and potentially reducing energy consumption. The method specifies that the hot heel must be at least 0.75 times the ratio of heat required to melt the scrap to the heat available from the hot heel.

U.S. Patent 3,955,964 (May 11, 1976) describes a method for producing steel in an electric arc furnace using a molten charge made from high-carbon ferrous metal-containing less than 3% carbon, 0.2% silicon, and 0.2% manganese, heated to at least 1375°C. A solid metallic charge, including scrap steel, hot briquetted iron, direct reduced iron, and iron ore, is added to form a charge mixture. The molten steel is then superheated, finished, and tapped into a ladle for casting while maintaining chemical composition and purity.

U.S. Patent 6,162,274 (Dec 11, 2000) outlines a two-step steel production method in submerged electric arc furnaces, beginning with charging reduced iron pellets to produce hot metal, which is then used to efficiently melt a second portion of pellets, leading to steel production. The process emphasizes maintaining a specific weight ratio (30-70%) of the first and second pellet portions to optimize melting and ensure high-quality steel output.

CN104962800B relates to a smelting method for stainless steel, which involves electric arc furnace (EAF) smelting, primary smelting in a low-frequency (LF) furnace, vacuum oxygen decarburization (VOD) furnace smelting, and LF furnace re-smelting. This method improves molten steel quality, reduces production costs, and addresses the challenge of smelting various molten steel types in a single EAF.

CN102787195B describes a stainless-steel smelting method using an ultrahigh-power electric arc furnace with an eccentric bottom for direct iron reduction, a large-flow furnace wall cluster coal oxidation gun, and refining through AOD and VOD furnaces before continuous casting.

The above-recited prior arts focus on traditional steelmaking methods, which are associated with higher GHG emissions than the new processes proposed. The proposed method aims to address the reduction of GHG emissions, which remain unaddressed in the conventional routes.

Thus, there exists a dire need in the art, to provide a system and a method for producing green steel with modified melting steps using EAF having low carbon emissions.

### Objects of the present disclosure

Some of the objects of the present disclosure, which at least one embodiment herein satisfies are as listed herein below.

It is a general object of the present disclosure to provide a system to produce green steel in an environmentally friendly manner with reduced GHG emissions and a method thereof.

It is another object of the present disclosure to improve the Electric arc furnace (EAF) steelmaking process by integrating controlled oxygen supply, enhancing the energy efficiency of the process, and utilizing electric vehicles for scrap transportation.

It is yet another object of the present disclosure to provide a system to reduce the environmental impact of steel production by optimizing the use of scrap metal from various sources, including industrial, manufacturing, and post-consumer scrap, thereby minimizing the need for primary raw materials and reducing emissions associated with the extraction of iron ore.

It is yet another object of the present disclosure to provide a method that allows for the segregation and selection of scrap to ensure a specific metal combination, thereby optimizing the composition of the steel produced and enhancing the overall quality of the final product i.e. green steel.

Various objects, features, aspects, and advantages of the inventive subject matter will become more apparent from the following detailed description of preferred embodiments, along with the accompanying drawing figures in which like numerals represent like components.

### Summary

Within the scope of this application, it is expressly envisaged that the various aspects, embodiments, examples, and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

An aspect of the present disclosure provides a method for producing green steel while minimizing greenhouse gas emissions. The method involves the first step of obtaining scrap from one or more sources, where the scrap includes various types of scrap alloys. The scrap is charged into an electric furnace and melted in the presence of a controlled supply of oxygen to obtain molten steel. The molten steel is transferred to a refining furnace and vacuum refining for further refinement and degassing before being sent to a casting area to produce green steel.

In another aspect of the present disclosure, the scrap is transferred using an electric vehicle and segregated to achieve specific metal combinations. The scrap may include industrial scrap, manufacturing scrap, obsolete scrap, post-consumer scrap, process scrap, carbon steel scrap, stainless steel scrap, alloy steel scrap, non-ferrous scrap, electronic scrap, or high-alloy scrap. The oxygen supply is regulated using controlling means such as oxygen lances, flow control valves, flow meters, computational systems, or oxygen purity control systems.

In yet another aspect of the disclosure, the method includes the step of mixing purifying agents into the electric arc furnace to form slag. The purifying agents may include lime, fluorspar, dolomite, or synthetic slag material. The lime is a basic flux that helps remove acidic impurities like phosphorus and sulfur. Fluorspar (CaF₂) acts as a flux to lower the melting point of slag, improving its fluidity and facilitating the removal of impurities. Dolomite (CaMg(CO₃)₂) is a double carbonate of calcium and magnesium. It provides both calcium and magnesium oxides during melting. Aluminum acts as a deoxidizer, reacting with dissolved oxygen to reduce its content in the molten steel. Silica contributes to slag formation, but it is typically used in acidic slag environments. Synthetic slag is a pre-mixed combination of fluxes (lime, fluorspar, alumina, etc.) tailored for specific refining needs.

In yet another aspect, the method includes the step of refining the molten steel in the refining furnace, trimming additions to the molten steel using ferroalloys and alloying elements to achieve the desired chemical composition, and degassing the refined steel using a vacuum-refining unit. The degassed steel is then transferred to the casting area.

In yet another aspect, the power supply for charging, melting, refining, and vacuum degassing operations is generated from renewable energy sources. The vacuum in the vacuum-refining unit is formed using power generated from the renewable energy sources and biodiesel.

### Brief description of drawings

The accompanying drawings, which are incorporated herein, and constitute a part of this disclosure, illustrate exemplary embodiments of the disclosed methods and systems which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that the disclosure of such drawings includes the disclosure of electrical components, electronic components or circuitry commonly used to implement such components.
FIG. 1 illustrates an exemplary flow chart of a method for producing green steel with a modified melting step, in accordance with an exemplary embodiment of the present disclosure.
FIG. 2 illustrates an exemplary block diagram of a system for producing green steel, in accordance with an exemplary embodiment of the present disclosure.
FIG. 3 illustrates an exemplary flow diagram representing the overall process of producing green steel, in accordance with an embodiment of the present disclosure.

Other objects, advantages, and novel features of the disclosure will become apparent from the following more detailed description of the present embodiment when taken in conjunction with the accompanying drawings.

### Detailed description

Various example embodiments will now be described more fully with reference to the accompanying drawings in which only some example embodiments are shown. Specific structural and functional details disclosed herein are merely representative for purposes of describing example embodiments. The present disclosure, however, may be embodied in many alternate forms and should not be construed as limited to only the example embodiments set forth herein.

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

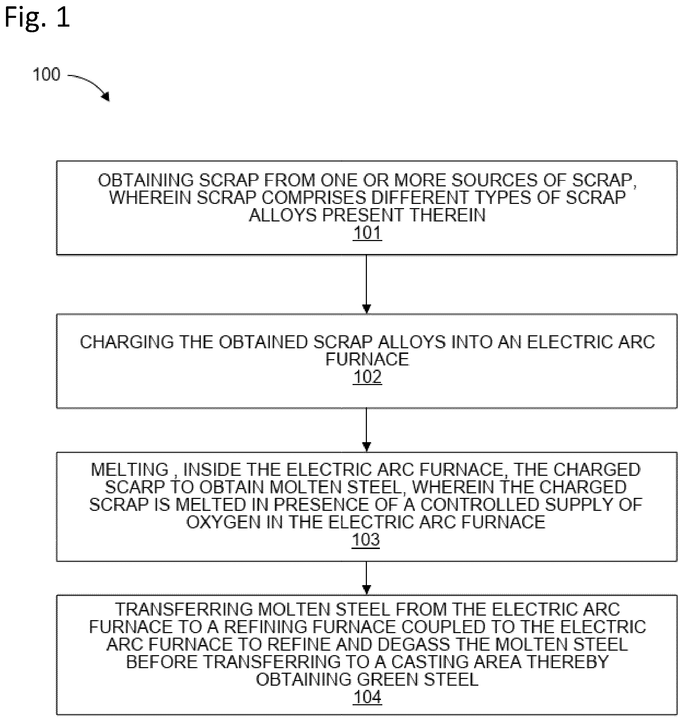

Hereinafter, the exemplary embodiments of the present disclosure will be described with reference to the accompanying drawings FIGs. 1-3.

FIG. 1 illustrates an exemplary flow chart (100) of a method (100) for producing green steel (600) with a modified melting step, in accordance with an exemplary embodiment of the present disclosure.

In an embodiment of the present disclosure, the method (100) for producing green steel (600) while minimizing greenhouse gas emissions and optimizing the use of renewable energy sources is disclosed.

At block 101, the method (100) includes the step of obtaining scrap (201) from one or more sources of scrap (700). The scrap (201) includes but is not limited to different types of scrap alloys (202). The one or more sources of scrap (700) may include but are not limited to, industrial scrap, manufacturing scrap, obsolete scrap, post-consumer scrap, process scrap, carbon steel scrap, stainless steel scrap, alloy steel scrap, non-ferrous scrap, electronic scrap, or high-alloy scrap. The scrap (201) is transported using an electric vehicle to reduce environmental impact.

At block 102, the method (100) includes the step of charging (102) the obtained scrap (201) into an electric arc furnace (203). In a preferred embodiment, the electric furnace (203) is an electric arc furnace (EAF), which is an energy-efficient device for melting scrap metal. The scrap (201) is segregated to obtain specific metal combinations and is then charged into the electric arc furnace (203). The obtained scrap (201) preferably excludes pig iron and direct reduced iron (DRI) from different types of scrap alloys (202) for low GHG emissions.

Block 103 involves the melting (103) of the charged scrap (201) that occurs within the electric arc furnace (203) to produce molten steel (204). During the melting (103) process, a controlled supply of oxygen is provided to the electric arc furnace (203) using one or more controlling means (205).

In such embodiment, the controlling means (205) may include but are not limited to oxygen lances, one or more flow control valves, one or more flow control meters, computational control systems, or oxygen purity control mechanisms. The controlled oxygen supply ensures precise metallurgical reactions, such as dephosphorization and carbon control, thereby enhancing the quality of molten steel (204). In these embodiments, dephosphorization is the removal of phosphorus from the molten steel. Phosphorus is an undesirable impurity as it can make steel brittle. The reaction occurs by forming phosphorus oxides that are absorbed into the slag.

At block 104, the molten steel (204) is transferred (104) from the electric arc furnace (203) to a refining furnace (207) for further processing. The refining furnace (207) refines (105) the molten steel (204) by removing impurities and adjusting its chemical composition. During refining (105), one or more purifying agents are added to the molten steel (204). These purifying agents may include but are not limited to lime (CaO), fluorspar (CaF₂), dolomite (CaMg(CO₃)₂), or synthetic slag material. The addition of purifying agents facilitates the formation of slag, which reacts with the molten steel (204) during slag-metal reactions. The slag-metal reactions include but are not limited to desulfurization, deoxidation, inclusion removal. The reactions purify the molten steel (204) and ensure that the refined steel meets the desired specifications.

In such embodiment, the purification involves the slag-metal reactions that may include but are not limited to desulfurization, deoxidation, inclusion removal. Desulfurization removes sulfur, which is another impurity that can adversely affect steel's ductility and weldability. Sulfur reacts with calcium or magnesium-based purifying agents (like CaO or CaF₂) to form calcium sulfide (CaS) or other stable sulfur compounds, which migrate into the slag. The deoxidation process reduces dissolved oxygen in the molten steel to prevent defects like gas porosity and inclusions. Deoxidizers such as silicon (Si), aluminum (Al), or manganese (Mn) are added to the molten steel. The elements react with oxygen to form stable oxides (e.g., SiO₂, Al₂O₃, MnO), which float to the slag layer and are removed. Non-metallic inclusions, such as oxides and sulfides, can compromise the mechanical properties of steel. The inclusions are captured and absorbed by the slag. The use of purifying agents like synthetic slags ensures that the inclusions are bound efficiently, resulting in cleaner steel with better surface quality and structural integrity. Following the refining (105) step, the molten steel (204) is subjected to degassing (107) in a vacuum-refining unit (208). The vacuum-refining unit (208) removes dissolved gases, such as hydrogen, nitrogen, or oxygen, from the refined molten steel (204). The high level of the gases can lead to defects like hydrogen-induced cracking or flakes. During the Vacuum Oxygen Decarburization processing controlled reduction of carbon content in the molten steel under vacuum to meet specific composition requirements. Carbon reacts with oxygen to form carbon monoxide (CO) or carbon dioxide (CO₂), which escape from the molten steel (204). The reaction is facilitated under oxidizing conditions and for producing low-carbon or ultra-low-carbon stainless steels. The degassing (107) step ensures that the refined steel exhibits superior mechanical and chemical properties. After degassing (107), the refined steel is transferred to the casting area (206) for solidification and shaping.

The method (100) further includes trimming addition of ferroalloys to (106) the molten steel (204) by adding one or more ferroalloys or alloying elements to achieve the predetermined chemical composition of the refined steel. In such embodiment, ferroalloys and alloying elements used for trimming (106) may include but are not limited to silicon, Aluminium, carbon, niobium, boron, tungsten, copper, manganese, chromium, nickel, molybdenum, vanadium, titanium, or cobalt. The trimming (106) step ensures that the green steel (600) meets specific mechanical, chemical, and physical requirements.

The casting area (206) includes one or more molds to shape the vacuum-refined steel into desired forms. Additionally, the casting area (206) includes but is not limited to a cooling system (206-1) that facilitates the solidification of the molten steel. The cooling system (206-1) ensures uniform cooling and minimizes internal defects in the solidified steel.

In an exemplary implementation of the embodiment, the green steel (600) produced in the casting area (206) may include but is not limited to low-carbon steel, medium-carbon steel, high-carbon steel, high-strength low-alloy (HSLA) steel, low alloy steel, high alloy steel, microalloy steel stainless steel, iron (Fe)-based superalloys, tool steel, die steel, or valve steel.

In the exemplary implementation of the embodiment, the method (100) utilizes power supply (111) which is electricity generated from renewable energy sources. In such embodiment, renewable energy sources may include but are not limited to solar power, wind power, or hydropower. The power supply (111) is used to operate the electric arc furnace (203), refining furnace (207), vacuum-refining unit (208), and casting area (206) thereby reducing the carbon footprint of the entire process. Additionally, the vacuum-refining unit (208) may form a vacuum for its operations using the power supply (111). The vacuum is formed using one or more boiler operations. One or more boiler operations may include but are not limited to, steam ejector operation, barometric condenser operation, mechanical booster, steam combination, thermo-compressor operations, or steam-turbine-driven vacuum pumps.

In the exemplary implementation of the embodiment, the scrap metal is metal waste generated from industrial processes, manufacturing, construction, and end-of-life products is recyclable.

In the exemplary implementation of the embodiment, the method (100) ensures that the production process incorporates environmentally sustainable practices. By using electricity generated from renewable energy sources, electric vehicles, and efficient furnaces, the method (100) minimizes greenhouse gas emissions. The green steel (600) produced through the method (100) is suitable for a wide range of applications, including but not limited to, construction, automotive, energy, bearing, general engineering applications, Nuclear, Oil and Gas, Tool and Die, Defence, Chemical industry application and Aerospace industries.

In the exemplary implementation of the embodiment, one or more charging mechanisms are used to charge the obtained scrap (201). The charging mechanisms may include but are not limited to, a crane, hoist, charging bucket, or vibrating feeders.

In such embodiment, Sensors placed within and around the EAF (203) continuously or discreetly measure variables such as temperature, oxygen flow rate, and metal temperature. In-house developed models analyse the data and accordingly oxygen supply in the EAF is regulated.

To summarise, the disclosed method (100) includes a modified melting step wherein the use of oxygen is controlled. The method initially begins with the transportation of scrap (201) and raw materials by means of zero-emission vehicles such as battery-operated forklifts and trucks. The obtained scrap (201) includes the different types of scrap alloys (202) that cover all types of ferrous alloys. The method (100) restricts the usage of oxygen and calculated quantities of oxygen required for dephosphorization are supplied. The method (100) strategically excludes the use of pig iron in the charged scrap (201) in EAF (203) and the scrap (201) matches the chemistry of the alloy to be made is used. Generally, the charged scrap (201) (i.e. input to EAF) includes pig iron (20-25%), heavy melting scrap (50-60%), DRI (8-10%), plant return scrap (5-8%), machining chips scrap (5-8%). Pig iron consists of around 4 % of carbon, which will get reduced due to oxygen blowing and forms CO and CO2, which is a part of GHG emissions. The addition of DRI causes an increase in phosphorous levels. Since phosphorous is an impurity, the addition of Oxygen is needed to refine the impurity. Thus, the quantity of oxygen used in EAF (203) increases. Hence use of DRI and pig iron is prohibited. The method further involves the steps of the ladle refining and vacuum degassing and trimming additions of ferroalloys to have very low GHG emissions. The power required for melting in EAF and LF furnaces, vacuum refining unit and casting of the alloys made thereof is generated by renewable energy sources such as solar power. The vacuum is generated for VD and VOD using biodiesel for the boiler operations. Hence, the method (100) is a cost-effective way of producing green steel (600) with very low GHG emissions.

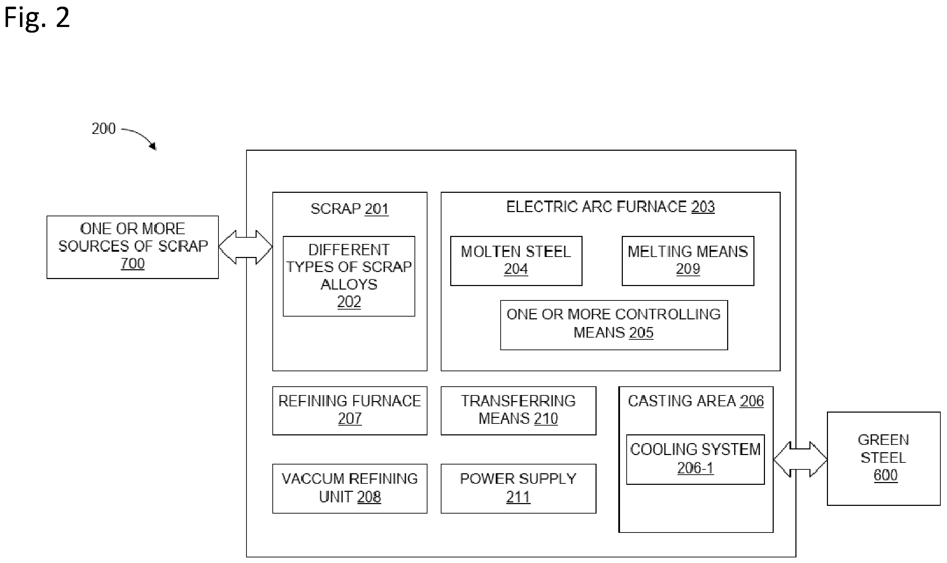

FIG. 2 illustrates an exemplary block diagram (200) of a system (200) for producing green steel (600), in accordance with an exemplary embodiment of the present disclosure.

In another embodiment of the present disclosure, the system (200) for producing green steel (600) in an environmentally sustainable manner while optimizing energy efficiency and material utilization is disclosed. The system (200) includes an electric furnace (203) (the terms "electric arc furnace", and "EAF" used interchangeably hereinafter) that is designed to melt scrap (201). The scrap (201) is obtained from one or more sources of scrap (700) and includes different types of scrap alloys (202). The types of scrap alloys (202) may include but are not limited to industrial scrap, manufacturing scrap, obsolete scrap, post-consumer scrap, process scrap, carbon steel scrap, stainless steel scrap, alloy steel scrap, non-ferrous scrap, electronic scrap, or high-alloy scrap. The scrap (201) is transported to the EAF (203) using an electric vehicle powered by renewable energy sources to minimize greenhouse gas emissions. The scrap (201) is then segregated to obtain specific metal combinations required for further processing.

The system (200) includes a melting means (209) that facilitates the melting of the charged scrap (201) inside the EAF (203). The melting process is conducted in the presence of a controlled supply of oxygen to achieve precise metallurgical reactions necessary for the production of molten steel (204). The controlled supply of oxygen is provided using one or more controlling means (205).

In an exemplary implementation of the embodiment, the controlling means (205) may include but are not limited to, oxygen lances, one or more flow control valves, one or more flow control meters, computational control systems, or oxygen purity control mechanisms. The controlled oxygen supply ensures efficient reactions such as dephosphorization and carbon removal, enhancing the quality of the molten steel (204).

In yet another embodiment of the present disclosure, the system (200) integrates in-house developed models to monitor the data and accordingly regulate the oxygen supply in real-time.

The system (200) further includes a transferring means (210) to transfer the molten steel (204) from the EAF (203) to a refining furnace (207). The refining furnace (207) is connected to the EAF (203) and is used to refine the molten steel (204) by removing impurities and adjusting its chemical composition. During the refining process, one or more purifying agents are added to facilitate slag-metal reactions.

In the exemplary implementation of the embodiment, the purifying agents may include but are not limited to lime (CaO), fluorspar (CaF₂), dolomite (CaMg(CO₃)₂), or synthetic slag material. The slag-metal reactions may include but are not limited to desulfurization, deoxidation, inclusion removal.

Following the refining unit (207) step, the molten steel (204) is subjected to a vacuum-refining unit (208). The vacuum-refining unit (208) removes dissolved gases, such as hydrogen, nitrogen, or oxygen, from the refined steel. These reactions purify the molten steel (204), ensuring that the refined steel meets the desired specifications.

In the exemplary implementation of the embodiment, the refined molten steel (204) is transferred to a casting area (206) for solidification and shaping. The casting area (206) is equipped with one or more molds to form the refined steel into desired shapes. The casting area (206) also includes a cooling system (206-1) that facilitates uniform solidification of the molten steel, reducing internal defects and ensuring superior structural integrity. The green steel (600) produced in the casting area (206) may include but is not limited to low carbon steel, medium carbon steel, high carbon steel, high-strength low-alloy (HSLA) steel, low alloy steel, micro alloy steel, high alloy steel, stainless steel, iron (Fe)-based superalloys tool steel, die steel, or valve steel.

The power required to operate the system (200) is provided by electricity generated from renewable energy sources, such as solar power, wind power, or hydropower. The use of renewable energy sources minimizes the carbon footprint of the system (200), aligning with environmental sustainability goals.

To summarize, by employing innovative technologies and sustainable practices, the disclosed system (200) addresses the need for greener steel production methods. The green steel (600) produced by the system (200) is suitable for diverse applications across industries such as construction, automotive, energy, bearing, general engineering applications, Nuclear, Oil and Gas, Tool and Die, Defence and Aerospace, Chemical.

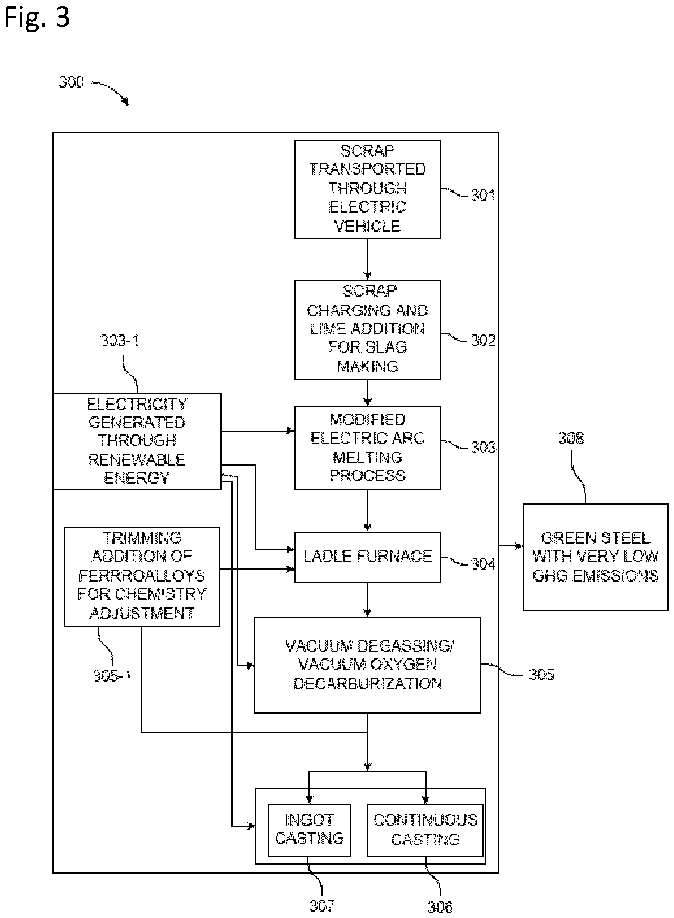

FIG. 3 illustrates an exemplary flow diagram (300) representing the overall process of producing green steel (600), in accordance with an embodiment of the present disclosure.

Referring to FIG. 3, the obtained scrap (201) is strategically selected to have lesser to no ferroalloy additions and transported using electric vehicles at step 301. Further charging of scrap in EAF is done using cranes which use electricity generated from renewable energy sources and lime added for slag making at step 302. After charging, primary melting is done in the electric furnace (203) where the use of oxygen is meticulously controlled and only the oxygen quantity required for dephosphorisation is supplied at step 303. The melting of charged scrap (201) is done using electricity or power generated from renewable energy sources such as solar power (step 303-1) The liquid metal thus produced is then transferred to a ladle furnace i.e. refining furnace (207) for refining purpose at step 304. The slag metal reactions occurring in the ladle furnace (207) followed by vacuum treatment done by vaccum refining unit (208) refine the liquid metal as well as control the level of gases such as O₂, H₂, and N₂. The GHG emissions that occurred during the steps are very minimal. The trimming addition of ferroalloys is performed after VD emits very minimal GHG emissions in steps 305-1. In the case of stainless steels or where carbon wt% requirement is much lower, liquid metal is transferred to vacuum oxygen decarburization (VOD) for removal of carbon at step 305. The refined liquid metal thus produced is now transferred to either the continuous casting route (306) or to ingot casting route (307). With the disclosed method

(200), green steel (600) is produced with very low GHG emissions at step 308, thereby lowering the GHG emissions level drastically.

In yet another embodiment of the present disclosure, the method (100) to produce steel with very low greenhouse gas (GHG) emissions that cover Scope 1, scope 2, and Scope 3 defined by the GHG protocol. The scopes include scope 1: direct emissions during the manufacturing phase, scope 2: indirect emissions during power generation, and scope 3: indirect emissions during the production of raw materials, fuels, and transportation.

Table 1 gives the definition of GHG emissions under Scope 1, Scope 2, and Scope 3.

**Table 1**

| **Scope No.** | **Definition** |
|---|---|
| **Scope 1** | Direct GHG emissions occur from sources that are owned or controlled by the company. (At source/manufacturing plant) |
| **Scope 2** | GHG emissions are indirect emissions from the generation of purchased energy, from a utility provider. In other words, all GHG emissions released in the atmosphere, from the consumption of purchased electricity, steam, heat, and cooling. |
| **Scope 3** | Emissions that are all indirect emissions consequences of the activities of the company, but occur from sources not owned or controlled by the company. |

Scope 1 emission reduction: the raw material required to produce the steel through the EAF route is a charge mix that essentially includes various types of scrap. Use of Pig Iron is prohibited which is a major source of GHG emission during EAF steel-making. Unlike the conventional route of EAF steel-making, where oxygen is blown to produce energy through exothermic reactions which in turn increases the GHG emissions, the disclosed method restricts the usage of oxygen, and calculated quantities of oxygen required for dephosphorization are supplied. The energy required for melting the scrap is completely supplied by electrical energy. Scrap generated during hot deformation, steel casting, grinding, and machining, etc. Such scrap is available in the nearby area of the manufacturing location. The sources of scrap (700) may include, but are not limited to, industrial scrap, manufacturing scrap, obsolete scrap, post-consumer scrap, process scrap, carbon steel scrap, stainless steel scrap, alloy steel scrap, non-ferrous scrap, electronic scrap, or high-alloy scrap. To reduce & avoid the usage of virgin ferroalloys, scrap (201) is carefully selected to match the chemistry required for the finished steel product. In the refining furnace (207) or ladle furnace (the terms "ladle furnace or refining furnace are used interchangeably hereinafter) and vacuum degassing minimum ferroalloys are used for trimming additions after vacuum degassing (VD).

Scope 2: the power is produced using a captive or non-captive renewable energy power plant and supplied through the power supply (211). The same energy is being utilized for the melting of steel in the electric arc furnace (EAF), ladle furnace (207), vacuum degassing, VOD and for casting through continuous casting (CC) route or ingot casting (IC) route. Biodiesel is used to produce the energy required for steam generation in the boiler to create a vacuum for vacuum degassing or in the vacuum oxygen decarburization (VOD) process.

Scope 3: The raw material, i.e. scrap is transported to the melting facility using electric vehicles such as forklifts and e-trucks. Further, such end-of-life manufacturing scrap has zero GHG emissions as per ISO 14404-2:2013. The calculation method of carbon dioxide emission intensity from iron and steel production, Part 2: Steel plant with electric arc furnace (EAF).

In yet another embodiment of the present disclosure, the present disclosure helps to minimize the GHG emissions that occur during the entire method (100) of steelmaking. Using the disclosed method (100), all types of steel including low carbon, medium carbon, high carbon, HSLA, low alloy steel, micro alloy, high alloy steel, stainless steel, Fe based superalloys, tool, die steel, or valve steel are effectively produced. The individual elemental range is specified in table 2 below. The entire range of various chemical compositions of the steel grades that can be produced will be a subset of the elemental range mentioned in Table 2, thus Table 2 encompasses all the types of steel and ferrous alloys.

**Table 2**

| **Element** | **C** | **Mn** | **Si** | **S** | **P** | **Cr** | **Ni** | **Mo** | **Al** | **Ti** |
|---|---|---|---|---|---|---|---|---|---|---|
| **Range (Wt%)** | 0.005 - 1.5 | 0 - 30 | 0 - 5 | 0 - 0.9 | 0 - 0.9 | 0 - 30 | 0 - 45 | 0 - 15 | 0 - 10 | 0 - 5 |

| **Element** | **V** | **Nb** | **W** | **Cu** | **Pb** | **Sn** | **Te** | **Ca** | **Co** | **Ta** |
|---|---|---|---|---|---|---|---|---|---|---|
| **Range (Wt%)** | 0 - 10 | 0 - 10 | 0 - 10 | 0 - 10 | 0 - 0.5 | 0 - 0.5 | 0 - 0.5 | 0 - 0.5 | 0 - 5 | 0 - 0.1 |

| **Element** | **Sb** | **Ce** | **La** | **Zr** | **Zn** | **O₂** | **H₂** | **N₂** | **As** | **B** |
|---|---|---|---|---|---|---|---|---|---|---|
| **Range (Wt%)** | 0 - 0.1 | 0 - 0.1 | 0 - 0.1 | 0 - 0.1 | 0 - 0.1 | 0 - 0.05 | 0 - 0.01 | 0 - 1 | 0 - 0.5 | 0 - 0.5 |

To summarise, the present disclosure integrates the steps to reduce GHG emissions in each scope. To minimize the Scope 1 emissions, the scrap (201) has been used as a raw material. The scrap (201) is selected to match the chemistry of the final finished grade of steel product. The pig iron or direct reduced iron (DRI) is not used in the charge mix. To reduce scope 2 emissions, the power is generated using renewable energy sources such as solar power and biodiesel for vacuum creation. To reduce the scope 3 emissions, the scrap (201) is taken from nearby locations and transported through electric vehicles to the melting station.

In yet another embodiment of the present disclosure, the working examples to illustrate the method (100) are disclosed.

Example 1: The method (100) is applied to two more cases of different steel grades of low alloy steel such as Cr-Mo Steel and Cr-Ni-Mo steels. In both cases pig iron or DRI is not used and oxygen is blown in the EAF if required for dephosphorization.
Heat No: HN170967 (Regular) & GS177974 (Green steel);
Grade: AISI 4340

**Table 3: Final chemical composition achieved in ladle furnace (207)**

| **Element** | **C** | **Mn** | **Si** | **S** | **P** | **Cr** | **Ni** | **Mo** | **Al** | **N** | **Fe** |
|---|---|---|---|---|---|---|---|---|---|---|---|
| Wt.% | 0.396 | 0.73 | 0.24 | 0.002 | 0.008 | 0.8 | 1.68 | 0.225 | 0.022 | 0.0065 | Balance |

The scrap (201) and ferroalloys and their respective consumption quantity are given in Table 4.

**Table 4**

| **Consumption comparison 4340 steel grade** | | | | |
|---|---|---|---|---|
| **Process** | **Consumables** | **Unit** | **Regular steel** | **Green steel** |
| EAF | Scrap | Mt/Mt steel | 0.708 | 1.1253 |
| | PIG IRON | Mt/Mt steel | 0.222 | 0 |
| | SPONGE IRON (COAL BASED) | Mt/Mt steel | 0.190 | 0 |
| | Lime | Mt/Mt steel | 0.063 | 0.063 |
| | Dolomite | Mt/Mt steel | 0.001 | 0.001 |
| | LSHS Oil | ltr/Mt steel | 6.000 | Biodiesel (8ltr max) |
| | Graphite Electrode Consumption | Mt/Mt steel | 0.003 | 0.003 |
| | Electricity | KWH/MT steel | 470.000 | Renewable energy (550 max) |
| | Oxygen | m3 | 1250.000 | Controlled manner (650 max) |
| | FeCrHC | kg/Mt steel | 12.95 | 10.4 |
| | Ni metal | kg/Mt steel | 16.93 | 0.846 |
| | Al Shot | kg/Mt steel | 0.9 | 0.9 |
| | FeMo | kg/Mt steel | 3.82 | 0.191 |
| | CPC | kg/Mt steel | 2.2 | 1.4 |
| LF+VD | FeSi | kg/Mt steel | 4.4 | 2.7 |
| | FeMnHC | kg/Mt steel | 10.92 | 8.7 |
| | lime | Mt/Mt steel | 0.017 | 0.017 |
| | Dolomite | Mt/Mt steel | 0.001 | 0.001 |
| | Graphite Electrode Consumption | Mt/Mt steel | 0.001 | 0.001 |
| | PNG for ladle heating | m3/Mt steel | 7.000 | Biodiesel (9 ltr max) |
| | Boiler PNG for vacuum generation | m3/Mt steel | 10.000 | Biodiesel (12 ltr max) |
| | Argon gas | m3/Mt steel | 1.900 | 1.900 |
| | Nitrogen gas | m3/Mt steel | 1.000 | 1.000 |
| | Electricity | KWH/MT steel | 135.000 | Renewable energy (140 max) |

Emissions associated with the green steel produced heat are illustrated in table 5:

**Table 5**

| **Emissions** | **Value (tCO2/MT)** | **Remarks** |
|---|---|---|
| **Scope 1 emissions** | | |
| Raw materials: Scrap | **0.030** | No raw material other than scrap was used |
| Fuels: No fossil fuels used | 0 | In IF other than electricity no other fuel/fossil fuel is required |
| Consumables | 0 | No other consumables were used |

| **Scope 2 emissions** | | |
|---|---|---|
| Renewable power used | 0 | The entire power used to melt the scarp in IF was sourced from the captive Renewable energy plant of the Company |

| **Scope 3 emissions** | | |
|---|---|---|
| 3.1 Purchased Goods & Services | **0.180** | Scrap comes with zero GHG emissions |
| 3.2 Capital Goods | 0 | No capital goods were replaced/sourced. |
| 3.3 Fuel & Energy related | 0 | No fossil fuel used |
| 3.4 Upstream transportation | 0 | Scrap was sourced from nearby manufacturing industries. The scrap was transported via Electric vehicles. |
| 3.5 Waste Generated | 0 | There was no waste generated in the process. |
| **Total Emissions** | **0.210** | **TCO2e/ MT steel cast** |

### Example 2:

Heat No: HN178103 (Regular) & GS169107 (Green steel);
Grade: 4140H

**Table 6 illustrates the chemical composition achieved in the ladle furnace.**

| **Table 6** | | | | | | | | | | | |
|---|---|---|---|---|---|---|---|---|---|---|---|
| **Element** | **C** | **Mn** | **Si** | **S** | **P** | **Cr** | **Ni** | **Mo** | **Al** | **N₂** | **Fe** |
| Wt.% | 0.377 | 0.93 | 0.25 | 0 | 0.008 | 1 | 0.07 | 0.2 | 0.026 | 93 | Balance |

The scrap and ferroalloys and their respective consumption quantity are given in table 7.

**Table 7**

| **Consumption 4140 comparison** | | | | |
|---|---|---|---|---|
| **Process** | **Consumables** | **Unit** | **Regular steel** | **Green Steel** |
| | Scrap | Mt/Mt steel | 0.606 | 1.045 |
| | PIG IRON | Mt/Mt steel | 0.261 | 0 |
| | SPONGE IRON (COAL BASED) | Mt/Mt steel | 0.177 | 0 |
| | Lime | Mt/Mt steel | 0.06 | 0.06 |
| EAF | Dolomite | Mt/Mt steel | 0.001 | 0.001 |
| | LSHS Oil | ltr/Mt steel | 6.00 | Biodiesel (8 max) |
| | Graphite Electrode Consumption | Mt/Mt steel | 0.003 | 0.003 |
| | Electricity | KWH/MT steel | 470.00 | Renewable energy (550 max) |
| | Oxygen | m3 | 1200.00 | Controlled manner (650) |
| LF+VD | FeCrHC | kg/Mt steel | 16.6 | 13.3 |
| | FeMo | kg/Mt steel | 3.4 | 0.14 |
| | Al Shot | kg/Mt steel | 1.6 | 1.0 |
| | CPC | kg/Mt steel | 1.6 | 1.0 |
| | FeSi | kg/Mt steel | 3.9 | 2.3 |
| | FeMnLC | kg/Mt steel | 13.93 | 11.1 |
| | lime | Mt/Mt steel | 0.0165 | 0.0165 |
| | Dolomite | Mt/Mt steel | 0.0010 | 0.0010 |
| | Electrode consumption | Mt/Mt steel | 0.0013 | 0.0013 |
| | PNG ladle heating | m3/Mt steel | 7.00 | Biodiesel (9ltr max) |
| | Boiler PNG | m3/Mt steel | 10.00 | Biodiesel (12ltr max) |
| | Argon gas | m3/Mt steel | 1.90 | 1.90 |
| | Nitrogen gas | m3/Mt steel | 1.00 | 1.00 |
| | Electricity | KWH/MT steel | 135.00 | Renewable energy (140) |
| CC | PNG | m3/Mt steel | 4.00 | Biodiesel (4.5 max) |
| | Electricity | KWH/MT steel | 29.00 | Renewable energy (35) |

Emissions associated with the green steel produced heat are illustrated in below table 8:

**Table 8**

| **Emissions** | **Value (tCO2/MT)** | **Remarks** |
|---|---|---|
| **Scope 1 emissions** | | |
| Raw materials: Scrap | **0.0299** | No raw material other than scrap was used |
| Fuels: No fossil fuels used | 0 | In IF other than electricity no other fuel/fossil fuel is required |
| Consumables | 0 | No other consumables were used |

| **Scope 2 emissions** | | |
|---|---|---|
| Renewable power used | 0 | Entire power used to melt the scarp in IF was sourced from captive Renewable energy plant of the Company |

| **Scope 3 emissions** | | |
|---|---|---|
| 3.1 Purchased goods & Services | **0.197** | Scrap comes with zero GHG emissions |
| 3.2 Capital Goods | 0 | No capital goods were replaced/sourced. |
| 3.3 Fuel & Energy related | 0 | No fossil fuel used |
| 3.4 Upstream transportation | 0 | Scrap was sourced from nearby manufacturing industries. The scrap was transported via Electric vehicles. |
| 3.5 Waste Generated | 0 | There was no waste generated in the process. |
| **Total Emissions** | **0.227** | **TCO2e/ MT steel cast** |

Using the method disclosed in present invention, the GHG emissions occurred during crude steel production of 4340 & 4140 Steel are 0.210 & 0.227 tCO2e/MT steel cast, respectively. Whereas the regular route of crude steel production for 4340 & 4140 Steel are 1.911 & 1.688 tCO2e/MT steel cast, respectively. Thus, the present disclosure helped to drastically reduce GHG emissions in the range of 80 to 90% as compared to emissions occurred by using conventional processing route. Hence the method (100) helps to reduce GHG emissions and is used for the production of various steel grades from different families.

What are described above are merely preferred embodiments of the present disclosure and are not to limit the present disclosure; any modification, equivalent replacement, and improvement within the principle of the present disclosure should be included in the protection scope of the present disclosure.

Since the subject matter of the dependent claims in relation to the prior art on the priority date may form separate and independent disclosures, the applicant reserves the right to make them the subject matter of independent claims or divisional declarations. They may furthermore also contain independent disclosures that have a configuration that is independent of the subject matters of the preceding dependent claims.

Further, elements and/or features of different example embodiments may be combined with each other and/or substituted for each other within the scope of this disclosure and appended claims.

### Advantages of the disclosure

The proposed disclosure provides a system and a method that involves a modified melting step using EAF to produce environmentally friendly i.e. green steel with very low carbon emissions.

The proposed disclosure provides a system and a method that involves oxygen control mechanisms, such as oxygen lances and flow control systems, which are utilized to precisely manage the oxygen supply during the steel making process, thereby reducing energy consumption and minimizing emissions.

The proposed disclosure provides a system and a method that emphasizes environmental sustainability by incorporating renewable energy sources, precise control of scrap segregation, and optimization of oxygen supply and refining processes, leading to the production of green steel with minimal environmental impact.

The proposed disclosure provides a system and a method that provides a cost-effective way of producing green steel with very low emissions where green hydrogen is not used.

The proposed disclosure provides a system and a method that uses the power supply required for melting in EAF and LF furnaces and vacuum refining unit and the casting of the alloys made thereof, is generated by renewable energy sources such as solar power.

The proposed disclosure provides a system and a method that generates a vacuum for vacuum degassing (VD) and the vacuum oxygen decarburization (VOD) using bio diesel for boiler operations.

## Claims

1. A method (100) for producing green steel (600), the method (100) comprising:
obtaining (101) scrap (201) from one or more sources of scrap (700), wherein the scrap (201) comprises different types of scrap alloys (202) present therein;
charging (102) the obtained scrap (201) into an electric furnace (203). melting (103), inside the electric furnace (203), the charged scarp (201) to obtain molten steel (204), wherein the charged scrap (201) is melted in presence of a controlled supply of oxygen in the electric furnace (203); and
transferring (104) the molten steel (204) from the electric furnace (203) to a refining furnace (207) coupled to the electric furnace (203), to refine the molten steel (204) before transferring to a casting area (206), thereby obtaining the green steel (600).

2. The method (100) as claimed in claim 1, wherein:
the scrap (201) is obtained from the one or more sources of scrap (700) using an electric vehicle;
the electric furnace (203) is the electric arc furnace (EAF);
the obtained scrap (201), is segregated to obtain a pre-determined metal composition therefrom and thereby charge the obtained scrap (201) in the Electric Arc furnace (203), wherein the obtained scrap (201) is selected from any or a combination of industrial scrap, manufacturing scrap, obsolete scrap, post-consumer scrap, process scrap, carbon steel scrap, stainless steel scrap, alloy steel scrap, non-ferrous scrap, electronic scrap, or high-alloy scrap; and
the controlled supply of the oxygen is provided using one or more controlling means (205) coupled to the electric furnace (203), the one or more controlling means (205) are selected from any of oxygen lances, one or more flow control valves, one or more flow control meters, or oxygen purity control.

3. The method (100) as claimed in claim 1, wherein the method (100) further comprises:
mixing, into the electric furnace (203), one or more purifying agents to the charged scrap (201) to obtain a slag, wherein the one or more purifying agents are selected from any of lime (CaO), fluorspar (CaF₂), dolomite (CaMg(CO₃)₂), or synthetic slag material; and
purifying, through one or more slag-metal reactions, the charged scrap (201) by mixing the obtained slag into the charged scrap (201), wherein the one or more slag-metal reactions are selected from any or a combination of dephosphorization, desulfurization, deoxidation, inclusion removal, gas removal (hydrogen, nitrogen, or oxygen), or decarburization.

4. The method (100) as claimed in claim 1, wherein the method (100) further comprises:
refining (105), by a refining furnace (207) coupled to the electric furnace (203), the molten steel (204) before transferring to the casting area (206), wherein the refining furnace (207) is coupled to the electric furnace (203);
trimming (106), by adding one or more ferroalloys and alloying elements, in the molten steel (204) to obtain a pre-determined chemical composition of the refined steel (204); and
degassing (107), by a vacuum-refining unit (208) coupled to the refining furnace (207) and the casting area (206), the refined steel (204) to transfer the vacuum-refined steel to the casting area (206).

5. The method (100) as claimed in claim 1, wherein:
the obtained scrap (201) is charged using a power supply (111) generated from renewable energy source;
the charged scarp (201 is melted using the power supply (111) generated from the renewable energy source;
the molten steel (204) is refined using the power supply (111) generated from the renewable energy source; and
the vacuum-refining unit (208) is formed vacuum for one or more boiler operations using the power supply (111) generated from the renewable energy source and using a biodiesel as fuel for steam generation.

6. The method (100) as claimed in claim 1, wherein the produced green steel (600) is selected from any or a combination of low carbon, medium carbon, high carbon, micro alloy, high-strength low-alloy (HSLA), low alloy steel, high alloy steel, stainless steel, Iron (Fe)-based super alloy and tool, die steel, or valve steel.

7. The method (100) as claimed in claim 1, wherein the different types of scrap alloys (202) are selected based on a chemical composition associated with the obtained scrap (201).

8. The method (100) as claimed in claim 1, wherein:
the casting area (206) is equipped with one or more molds to form the vacuum-refined steel into one or more shapes, wherein the casting area (206) further comprises a cooling system (206-1) that facilitates the solidification of the molten metal.

9. A system (200) to produce green steel (600), the system (200) comprising:
an electric furnace (203) to charge scrap (201), wherein the scrap (201) is obtained from one or more sources of scrap (700), and the scrap (201) comprises different types of scrap alloys (202) present therein;
a melting means (209) to melt the charged scrap (201) inside the electric furnace (203) wherein the charged scrap (201) is melted in the presence of a controlled supply of oxygen obtained in the electric furnace (203); and
a transferring means (210) to transfer the molten steel (204) from the electric furnace (203) to a refining furnace (207) coupled to the electric furnace (203), to refine the molten steel (204); and
a vacuum refining unit (208) to degas the refined steel received from the refining furnace (207) before transferring to a casting area (206) thereby obtain the green steel (600).

10. The system (100) as claimed in claim 9, wherein:
the scrap (201) is obtained from the one or more sources of scrap (700) using an electric vehicle;
the electric furnace (203) is the electric arc furnace (EAF);
the obtained scrap (201), is segregated to obtain specific metal combination therefrom and thereby charge the obtained scrap (201) in the Electric Arc furnace (203), wherein the obtained scrap (201) is selected from any or a combination of industrial scrap, manufacturing scrap, obsolete scrap, post-consumer scrap, process scrap, carbon steel scrap,
stainless steel scrap, alloy steel scrap, non-ferrous scrap, electronic scrap, or high-alloy scrap; and
the controlled supply of the oxygen is provided using one or more controlling means (205) coupled to the electric furnace (203), the one or more controlling means (205) are selected from any of oxygen lances, one or more flow control valves, one or more flow control meters, or oxygen purity control.
